# EUROPEAN PATENT SPECIFICATION

(11) **EP 0 262 978 B1**
(45) Date of publication and mention of the grant of the patent: **03.03.1993**
(21) Application number: 87308737.3
(22) Date of filing: 01.10.1987
(51) Int. Cl.: H04M 1/65

(54) **Automatic telephone answering apparatus**
Automatischer Fernsprechbeantworter
Appareil répondeur téléphonique automatique

(30) Priority: 01.10.1986 JP 234002/86
(43) Date of publication of application: 06.04.1988
(73) Proprietor: Miwa, Hirohide, Miyamae-Ku Kawasaki-Shi Kanagawan-Ken (JP); TOKYO KOSUMOSU DENKI KABUSHIKI KAISHA, Hachioji-shi Tokyo-to (JP)
(72) Inventor: Miwa, Hirohide, Kawasaki-shi Kanagawa-ken (JP)
(74) Representative: Piésold, Alexander J.

(56) References cited:
- EP-A- 0 121 291
- DE-A- 2 221 494
- DE-A- 2 854 516
- US-A- 4 319 089
- SPEECH TECHNOLOGY, vol. 3, no. 3, September-Oktober 1986, pages 80-83, New York, NY, US; W.M. SANDER et al.: "An instant recall emergency communication recorder"

## Description

This invention relates to automatic telephone answering apparatus.

Various kinds of automatic answering telephone sets are conventionally proposed and all of them have the following three functions:
(1) Circuit control function to detect a call signal to close a telephone circuit and to open the telephone circuit after use.
(2) Function to transmit or send a message (which will be called a sending message hereinafter) to the effect that "please orally give me a message (which will be called an incoming message hereinafter) subsequently to a signal sound (beep tone)" from an automatic answering telephone set when a telephone call is made from the outside.
(3) Function that an owner of an automatic answering telephone set or any other person can reproduce and listen to, directly or by a remote control, an incoming message recorded during absence.

For media for storing/reproducing a sending message, magnetic tapes of the endless type have been mainly used in the art. In recent years, semiconductor memories have been used resulting from remarkable progress of microelectronics.

As memory media for an incoming message, magnetic tapes of the compact casette type or the microcassette type have been conventionally used. They have been used mainly, but semiconductor memories have been recently used.

The problems with the conventional automatic answering telephone set are as follows.
(1) The length of an incoming message is indefinite because of variety of a quantity of business given by a person who communicates, individual variations of manner of speaking or the like. It is desirable that the capacity of the incoming message memory medium is more than ten minutes even at the minimum because of necessity of storing incoming messages of plural times. When an attempt is made to digitalize voice data having such a length and memorize the digitalized data, if such data is compressed using the technique, e.g., the current adaptive delta PCM etc., data quantity reaches 24 to 32 K bit/sec. Accordingly, for ensuring the capacity of incoming message medium of ten minutes, a semiconductor memory of 14.4 to 19.2 mega bits is required. Such a semiconductor memory cannot be economically realized. For this reason, semiconductor memories presently commercialized only have a capacity of 10 to 45 seconds.
(2) For a magnetic tape as an incoming message memory medium, a compact cassette or a microcassette selling on the market can be utilized. Accordingly, this is economical, but is troublesome in operation since it is required for reproducing an incoming message stored and listening to the reproduced message to switch the storing and reproducing device from the memory mode to the rewinding and to further switch to the reproducing mode after rewinding operation.
(3) Since it takes considerable time from a time at which the incoming message memory medium begins to be rewound to a time at which the incoming message stored therein begins to be reproduced and heard (about 30 to 60 seconds in an ordinary use condition, although depending upon a quantity of the incoming message stored), time required therefor becomes wasteful. In this case, where remote control of an automatic answering telephone set is carried out using a telephone from a far distant place, telephone charge is imposed on such a wasteful time, leading to the problem that the telephone charge becomes expensive. In addition, even in the case of directly operating an automatic answering telephone set, since it takes about one minute until a user can listen to an incoming message, there are instances where some person would feel irritated psychologically.

It is an object of the present invention to avoid these drawbacks associated with the prior art.

From EP-A-0 121 291 it is known to provide an automatic telephone answering apparatus comprising a main memory medium and an auxiliary memory medium.

The present invention is characterised by control means adapted to direct, in a recording mode of the apparatus, all or part of an incoming message or messages for storage first in said auxiliary memory medium and then any subsequent message or messages for storage in said main memory medium, said control means further being adapted to activate, in a replaying mode of the apparatus, playback means to reproduce the message(s) or part thereof stored in said auxiliary memory medium and simultaneously to activate means for rewinding/resetting said main memory medium whereafter said control means is arranged to activate said playback means to reproduce said incoming message(s) stored in said main memory medium.

Thus, a significant waiting time between remotely or manually switching the apparatus to its reproduction mode and replaying of a stored message may be avoided, thereby making it possible to listen to the incoming recorded message or messages immediately.

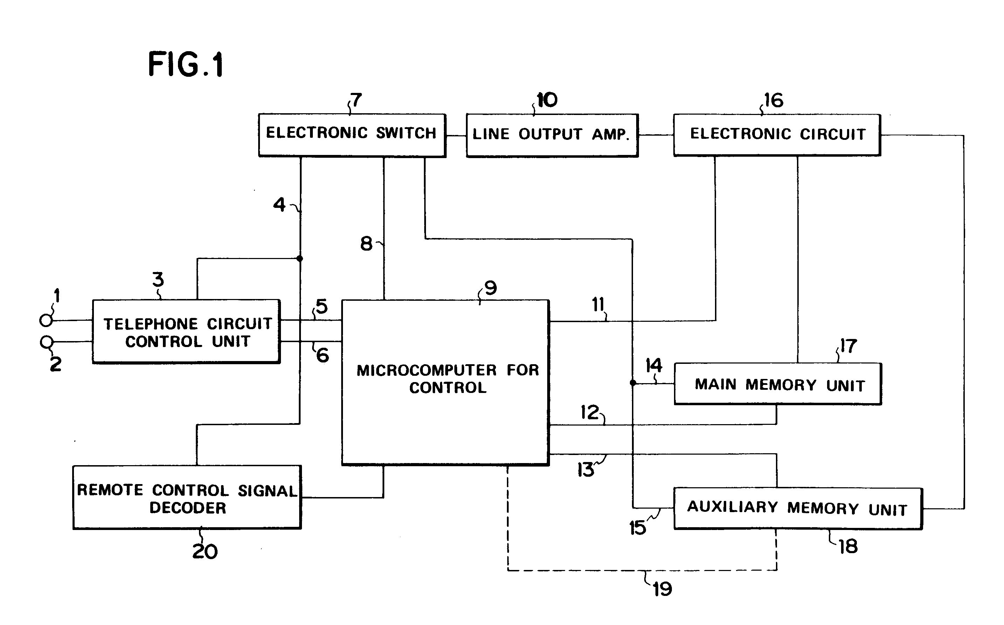

Figs. 1 to 3 are explanatory views illustrating, in a block form, different exemplary embodiments of an automatic answering telephone set in accordance with the present invention.

Fig. 1 is a block diagram showing the principle of an automatic answering telephone in accordance with the invention. In Fig. 1, an indication of a message transmitting unit is omitted.

In Fig. 1, reference numerals 1 and 2 denote terminals for connecting a telephone circuit thereto, respectively. Reference numeral 3 denotes a telephone circuit control unit, reference numeral 4 a bidirectional voice signal line, reference numeral 5 a calling detection output signal line for the telephone circuit control unit 3, and reference numeral 6 an input signal line for circuit control of the telephone circuit control unit 3.

Reference numeral 7 denotes an electronic switch for effecting switching of storing/reproducing of an incoming message, reference numeral 8 a signal line for controlling the electronic switch 7, reference numeral 9 a microcomputer for control, and reference numeral 10 a line output amplifier.

Reference numeral 11 denotes a control signal line for effecting switching of a reproduced output of a main memory unit 17 and a reproduced output of an auxiliary memory unit 18. Reference numeral 12 denotes a control signal bus for control of storing/rewinding/reproducing/starting/stopping/ and the like of the main memory unit 17.

Reference numeral 13 denotes a control signal bus for the auxiliary memory unit 18, which is similar to the control signal bus for the main memory unit 17.

Reference numerals 14 and 15 denote memory input signal lines for an incoming message, respectively. Reference numeral 16 denotes an electronic circuit for effecting switching of a reproduced output of the auxiliary memory unit 18 and a reproduced output of the main memory unit 17, or for allowing the reproduced outputs of the both memory units 17 and 18 to cross over at the time of reproduction. Reference numeral 17 denotes the above-mentioned main memory unit provided with a main memory medium, reference numeral 18 the above-mentioned auxiliary memory unit provided with an auxiliary memory medium, reference numeral 19 an address signal bus when a semiconductor memory is used as the auxiliary memory unit 18, and reference numeral 20 a remote control signal decoder.

The main memory unit 17 employed in the illustrated embodiment uses a magnetic tape of the compact cassette type or the microcassette type, or the like as the main memory medium. This main memory unit 17 is constructed so that all the operations for storing/reproducing, driving/stopping/rewinding of the memory medium, movement of the magnetic head, and the like can be electrically controlled by control signals from the microcomputer 9.

The auxiliary memory unit 18 employed in the illustrated embodiment constitutes the auxiliary memory medium with a voice analysis/synthesis LSI and a semiconductor memory, or uses a magnetic tape or a magnetic disk of the compact cassette type or the microcassette type, or the endless type in the same manner as in the main memory unit 17. This auxiliary memory unit 18 is also constituted so that all the operations for storing/reproducing, driving/stopping/rewinding of the memory medium, movement of the magnetic head, and the like can be electrically controlled by control signals from the microcomputer 9.

In this embodiment, an incoming number discriminator, a counter or an auxiliary memory medium residual or remaining capacity counter, which is reset at the time when reproducing an incoming message and listening thereto, or at the time when use of the automatic answering telephone set is initiated, is set in the microcomputer 9. In addition, the program of the microcomputer 9 in regard to the memory of an incoming message is prepared in advance as follows.
(1) When the residual or remaining capacity of the auxiliary memory medium is above a predetermined capacity, a first incoming message input from a telephone externally equipped or incoming messages subsequent thereto are first stored into the auxiliary memory medium of the auxiliary memory unit 18. On the other hand, when the residual capacity of the auxiliary memory medium is below the predetermined value, the main memory unit 17 is activated or started to thereby continuously store the subsequent incoming messages into the main memory medium, or to store a message received at first in the auxiliary memory medium when the residual capacity of the auxiliary memory medium exceeds the predetermined capacity to reach the end of the message.
(2) Where the auxiliary memory medium is constituted with a medium such as a magnetic tape which requires rewinding or an operation similar to rewinding, when the storing of an incoming message shifts to the main memory unit 17, the auxiliary memory unit 18 is caused to automatically effect an operation such as rewinding, thus placing it in reproducing/ standby state.
(3) Where the residual capacity of the auxiliary memory medium is below a predetermined capacity at the time of reception, a new incoming message input from a telephone externally equipped is stored, from the beginning thereof, into the main memory medium.

Further, the program of the microcomputer 9 when reproducing an incoming message and listening thereto is prepared in advance as follows.
(1) Where an automatic answering telephone set is subjected to remote control by a telephone externally equipped, after a beep tone is output subsequently to a sending message from the automatic answering telephone set, a reproducing instruction and a secret code by a DTMF (Dual Tone Multi Frequency) signal etc. from the telephone externally equipped are sent. When they are received by the microcomputer 9 via the remote control signal decoder 20, the received code is collated or compared with a secret code stored in advance in the microcomputer 9. As a result, the operation enters into the reproducing mode. In addition, when the automatic answering telephone set is operated so that it is directly brought into reproducing mode, the operation also enters into the reproducing mode. In this case, the incoming message stored in the auxiliary memory unit 18 is first reproduced, thereafter outputting the reproduced output to the telephone circuit via the electronic circuit 16, the line output amplifier 18, the electronic switch 7, and the telephone circuit control unit 3.
(2) During this time period, the main memory medium of the main memory unit 17 is rewound, placing it in reproducing standby state. At the time when the reproduction residual capacity of the auxiliary memory medium reaches a predetermined capacity, or at the time when the reproduction of all the incoming message stored in the auxiliary memory medium is completed, the reproduction of the main memory unit 18 is activated or started immediately at that time or after a short time elapses from that time.
(3) When a predetermined memory capacity of the auxiliary memory medium,selected so that it is in correspondence with the time point at which storing by the auxiliary memory unit is switched to that by the main memory medium at the time of storing an incoming message,becomes equal to a reproduction residual capacity of the auxiliary memory medium selected so that it is in correspondence with the time point at which the reproduction in the auxiliary memory unit is switched to that in the main memory unit at the time of reproduction, the microcomputer 9 controls the electronic circuit 16, thus activating the main memory unit 17 for the purpose of reproducing the incoming message, and simultaneously outputting a reproduced output of the main memory unit 17 to the line output amplifier 10.
(4) In addition, switching of the reproduction may adopt the following system. According to this system, the predetermined reproduction residual capacity of the auxiliary memory medium is caused to be less than the predetermined storing or memory residual capacity, thus allowing the microcomputer 9 to control the electronic circuit 16. Thus, at times subsequent to the time of switching of reproduction, the reproduction of the main memory unit 17 is initiated with a signal level reproduced at the auxiliary memory unit 18 being gradually lowering and overlapping with a signal level reproduced at the main memory unit 17, and its reproduced signal level is gradually increased. Thus, after the time point of switching of reproduction, a reproduced signal from the auxiliary memory unit 18 and a reproduced signal from the main memory unit 17 are caused to cross over.

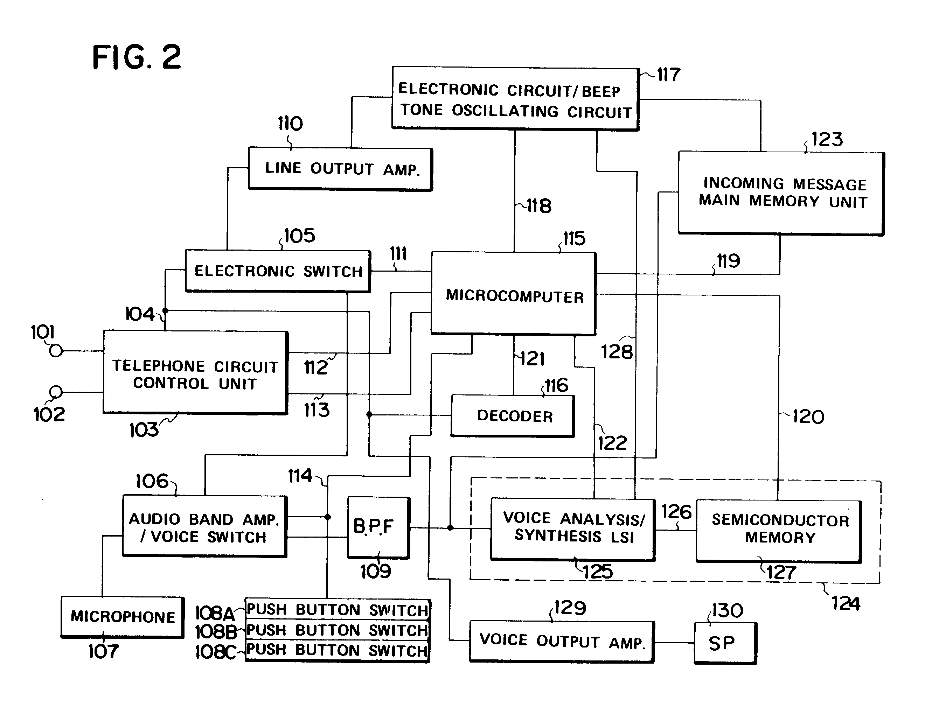

Fig. 2 is a block diagram showing an embodiment in which a semiconductor memory is used as an auxiliary memory medium in an automatic answering telephone set in accordance with the present invention.

In Fig. 2, reference numerals 101 and 102 denote terminals to which a telephone circuit is connected, respectively. Reference numeral 103 denotes a telephone circuit control unit, reference numeral 104 a bidirectional voice signal line, and reference numeral 105 an electronic switch for effecting switching of input/output of a voice signal to the telephone circuit.

Reference numeral 106 denotes an audio band amplifier/ voice switch, which is used commonly to storing of a sending message and an incoming message. This is an electronic circuit to detect whether or not a voice signal having a level above a certain level continues.

Reference numeral 107 denotes a microphone used for memorizing a sending message. Reference numeral 108A denotes a push-button switch depressed at the time of memorizing a sending message, reference numeral 108B a push-button switch depressed at the time of reproducing an incoming message stored in the automatic answering telephone set in the vicinity thereof and listening to the reproduced incoming message, and reference numeral 108C a push-button switch depressed at the time of selecting an automatic answering mode.

Reference numeral 109 denotes a band pass filter for limiting an audio band, reference numeral 110 a line output amplifier, reference numeral 111 an input/output control signal line, and a reference numeral 112 a calling detection signal line.

Reference numeral 113 denotes a circuit control signal used when a microcomputer 115 which will be described later instructs the telephone circuit control unit103 to close/open the telephone circuit. Reference numeral 114 denotes a control signal bus for connecting the push-button switches 108A to 108C, the audio band amplifier/voice switch 106 for memorization, and the microcomputer 115 to each other. Reference numeral 115 denotes the above-mentioned microcomputer, and reference numeral 116 a remote control signal decoder.

Reference numeral 117 denotes an electronic circuit/ beep tone oscillating circuit (which corresponds to the electronic circuit 16 in Fig. 1). This circuit is used for switching an input from the line output amplifier 110 to a main memory unit 123 or a semiconductor memory 127 provided in the voice memorizing and reproducing circuit 124, or for allowing it to cross over between the both memory units 123 and 127.

Reference numeral 118 denotes a control signal line through which a control signal for controlling the electronic circuit/beep tone oscillating circuit 117 is sent from the microcomputer 115.

Reference numeral 119 denotes a control signal bus used for control of storing/reproducing/starting/stopping/ rewinding etc. Reference numeral 120 denotes an address signal bus used for informing the microcomputer 115 of residual capacity of the auxiliary memory medium provided in the voice memorizing and reproducing unit 124. Reference numeral 121 denotes a decode signal line used for inputting a decoded output from the decoder 116 to the microcomputer 115.

Reference numeral 122 denotes a control signal bus used for sending a control signal to instruct "starting/stopping of both storing and reproducing of a sending message", "starting/stopping of both storing and reproducing of an incoming message", and the like from the microcomputer 115 to the voice memorizing and reproducing unit 124.

Reference numeral 123 denotes the above-mentioned main memory unit for storing an incoming message, which uses a magnetic tape of the compact cassette type or microcassette type as the memory medium. This memory unit 123 is constructed so that control of driving/stopping/rewinding/storing/reproducing of the memory medium/movement of the magnetic tape etc. is electrically executed by control signals from the microcomputer 115.

Reference numeral 124 denotes the above-mentioned voice memorizing and reproducing unit (corresponding to the auxiliary memory unit 18 in Fig. 1). This unit 124 is used commonly to storing/reproducing of a sending message and an auxiliary storing/reproducing of an incoming message.

Reference numeral 125 denotes a voice analysis/ synthesis LSI, and reference numeral 127 a semiconductor memory (SRAM or DRAM). Reference numeral 126 denotes a bidirectional data line/control signal bus/address bus connecting between the voice analysis/synthesis LSI 125 and the semiconductor memory 127.

Reference numeral 128 denotes a reproduced output signal line for the voice memorizing and reproducing unit 124, reference numeral 129 a voice output amplifier, and reference numeral 130 a speaker.

The memory of a sending message in the automatic answering telephone set in Fig. 2 is carried out as follows.

When the push-button switch 108A in Fig. 2 is depressed, the audio band amplifier/voice switch 106 selects the microphone 107, and at the same time the microcomputer 115 outputs a control signal to the voice memorizing and reproducing unit 124 through the control signal bus 122 so that the voice memorizing and reproducing 124 stores a sending message. In this condition, by announcing a sending message toward the microphone 107, the sending message is stored into the sending message area of the semiconductor memory 127.

When the push-button switches and 108A 108B are depressed at the same time in the automatic answering telephone set in Fig. 2, the voice memorizing and reproducing unit 124 is brought into reproducing state of a sending message. A control is carried out by the microcomputer 115 such that a reproduced signal of the sending message is input, without closing telephone circuit, to the voice output amplifier 129 via the reproduced output signal line 128, the electronic circuit/beep tone oscillating circuit 117, the line output amplifier 110, and the electronic switch 105, thereby permitting a user to listen to the sending message by making use of the speaker 30.

When a bell signal is received from the telephone circuit connected to the terminals 101 and 102 in Fig. 2, a calling detection signal is input to the microcomputer 115 via the calling detection signal line 112 by the calling detection circuit provided in the telephone circuit control unit 103. When the calling detection signal reaches a predetermined time, the microcomputer 115 judges that valid receiption has been effected to output a line closing signal to the calling detection signal line 112, thus allowing the telephone circuit control unit 103 to close the telephone circuit. Simultaneously with this, the microcomputer 115 outputs a signal for switching the electronic switch 105 to the reproducing mode and a signal for switching the electronic circuit/beep tone oscillating circuit 117 to the side of the voice memorizing and reproducing unit 124 to the input/output control signal line 111 and the control signal line 118, respectively. Then, the microcomputer 115 allows the voice memorizing and reproducing unit 124 to be in reproducing state of a sending message through the control signal bus 122.

As a result, a sending message stored in advance in the semiconductor memory 127 is output to the telephone circuit connected to the terminals 101 and 102 via the reproduced output signal line 128, the electronic circuit/beep-tone oscillating circuit 117, the line output amplifier 110, the electronic switch 105, and the telephone circuit control unit 103.

When the microcomputer 115 receives a signal from the address signal bus 120 to recognize the termination of the sending message, it instructs the electronic circuit/beep tone oscillating circuit 117 to output a beep tone through the control signal line 118. Subsequently to the instruction to output beep tone, the microcomputer 115 judges the memory residual information of the incoming message in the semiconductor memory 127 which is held on a RAM incorporated in the microcomputer 115. When the residual capacity is above a predetermined capacity, the microcomputer 115 instructs the voice memorizing and reproducing unit 124 to store the incoming message through the control signal bus 122.

In contrast, when the above-mentioned residual capacity of the memory is below the predetermined capacity, the microcomputer 115 instructs the main memory unit 123 to store the incoming message through the control signal bus 119.

Where memory of the incoming message is initiated on the side of the voice memorizing and reproducing unit 124, the microcomputer 115 monitors addresses of the semiconductor memory 127 through the address signal bus 120. When the residual capacity of the semiconductor memory 127 is below the predetermined capacity, the microcomputer 115 instructs the main memory unit 123 to store the incoming message through the control signal bus 119.

When the microcomputer 115 recognizes that the incoming message is in soundless state for a time more than a predetermined time by the voice switch function added to the audio band amplifier/voice switch 106, memory of the incoming message is completed, thus placing the automatic answering telephone set in calling wait condition.

The incoming message reproducing mode is started when the push-button switch 108B is depressed, or when the decoder 116 decodes a remote control signal and a secret code after responding to a call from a telephone externally equipped and then a secret code set in advance at the microcomputer 115 is in correspondence with the secret code decoded by the decoder 116.

When the incoming message reproducing mode is started, the microcomputer 115 first outputs control signals to the input/output control signal line 111 and the control signal line 118 so as to select the reproduced output of the voice memorizing and reproducing unit 124, thereafter to output a control signal to the control signal bus 122 so that the voice memorizing and reproducing unit 124 is in the incoming message reproducing state. Thus, where the reproducing mode is started by remote control, the reproduced output of the incoming message of the voice memorizing and reproducing unit 124 is output to the telephone circuit connected to the terminals 101 and 102 via the reproduced output signal line 128, the electronic circuit/beep tone oscillating circuit 117, the line output amplifier 110, the electronic switch 105, and the telephone circuit control unit 103.

Where the reproducing mode is started by the pushbutton switch 108B, a control is effected by the microcomputer 115 such that the telephone circuit control unit 103 does not close the telephone circuit and the reproduced output of the voice memorizing and reproducing unit 124 is output to the speaker 130 via the reproduced output signal line 128, the electronic circuit/beep tone oscillating circuit 117, the line output amplifier 110, the electronic switch 105, and the voice output amplifier 129.

Immediately when the voice memorizing and reproducing unit 124 initiates the reproduction of the incoming message, the microcomputer 115 outputs a control signal to the bus 119 so that the incoming message memory wait condition of the main memory unit 123 is released and the memory medium of the main memory unit 123 is rewound, resulting in reproducing wait condition.

After the reproduction of the incoming message is initiated in the voice memorizing and reproducing unit 124, the microcomputer 115 monitors addresses at which the semiconductor memory 127 is accessed to start reproduction of the main memory unit 123 when the residual capacity of the incoming message memory medium is below a predetermined capacity.

At this time, the electronic circuit/beep tone oscillating circuit 117 is controlled by the microcomputer 115 so that it switches the incoming message reproduced signal input to the line output amplifier 110 from the voice memorizing and reproducing unit 124 to the main memory unit 123, or it gradually increases the level of the reproduced signal from the main memory unit 123 while gradually reducing the level of the reproduced signal from the voice memorizing and reproducing unit 124, thus allowing the reproduced signals from the both memory units to cross over.

When reproduction of all incoming messages stored is completed, the microcomputer 115 executes all processings required for returning to the automatic answering mode.

Even in the case that reproduction of all incoming messages stored is not completed, when the decoder 116 decodes a reproduction stop signal, or when the push-button switch 108C is depressed, the microcomputer 115 momentarily interrupt the reproduction of the incoming message to execute all processings required for returning to the automatic answering mode.

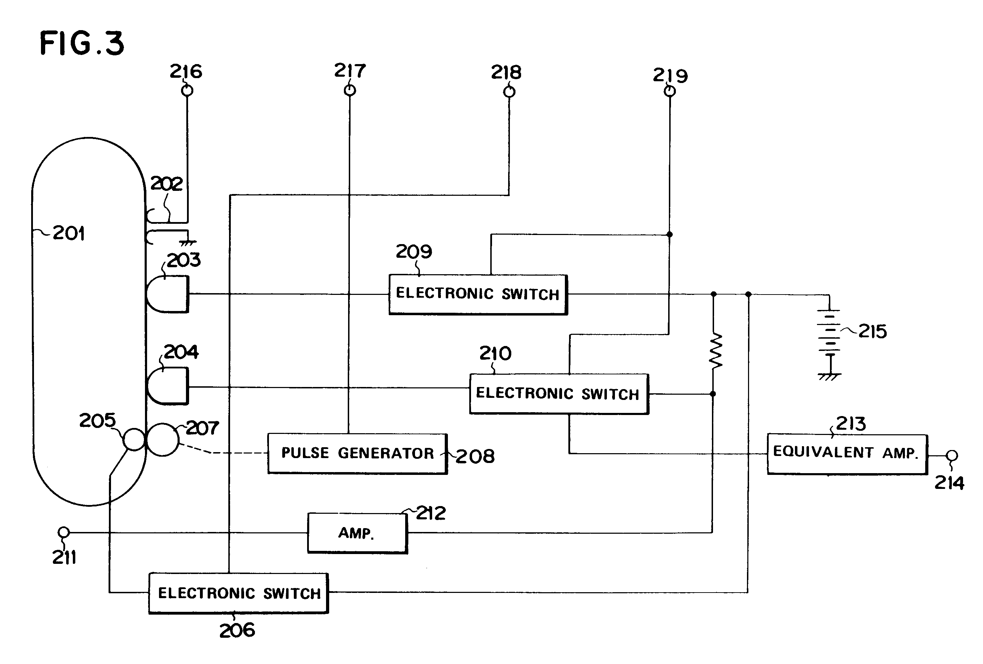

Fig. 3 shows a further embodiment of an automatic answering telephone set in accordance with the invention wherein a magnetic tape is used instead of the semiconductor memory as the auxiliary memory medium. In this embodiment, a new cassette tape etc. may be independently provided as the auxiliary memory medium, but it is possible to commonly use the cassette tape for storing a sending message for this purpose. Fig. 3 shows the example of such a common use and is a block diagram mainly illustrating the auxiliary memory unit of the automatic answering telephone set.

In Fig. 3, reference numeral 201 denotes a magnetic tape of the endless type in which a sensing metal leaf is attached to the joining portion, reference numeral 202 a sensing post, reference numeral 203 an erasing magnetic head, reference numeral 204 a memorizing and reproducing magnetic head, reference numeral 205 a direct drive type electric motor and a capstan, and reference numeral 206 an electronic switch for starting and stopping the electric motor 205.

Reference numeral 207 denotes a pinch roller for pressing the tape onto the capstan 205, and reference numeral 208 a pulse generator which generates a pulse corresponding to the rotation of the pinch roller 207 in order to input addresses of the memory medium to the microcomputer.

Reference numeral 209 denotes an electronic switch which effects on/off of an erasing current caused to flow in the erasing head, reference numeral 210 an electronic switch for effecting switching of storing and reproducing, reference numeral 211 an input terminal for a voice signal for memory, and reference numeral 212 an amplifier for allowing a memory current to flow in the memorizing/reproducing magnetic head 204.

Reference numeral 213 denotes an equivalent amplifier (equalizer) for a signal reproduced by memorizing/reproducing magnetic head 204, reference numeral 214 an output terminal for a reproduced signal, reference numeral 215 a dc power source, reference numeral 216 an output terminal for a signal informing to the microcomputer of zero-th address of the memory medium, reference numeral 217 an output terminal of the pulse generator 208, reference numeral 218 a terminal for a signal which controls the electronic switch 206 provided for control of drive and stop of the memory medium, and reference numeral 219 a terminal for a signal which controls memorizing and reproducing operation.

The output terminals 216, 217 and 219 in Fig. 3 are indicated collectively as the control signal bus 122 in Fig. 2. The terminal 218 in Fig. 3 corresponds to the address signal bus 120 in Fig. 2.

For the magnetic tape 201, a tape having a memory capacity of about one to two minutes in terms of time is used. A portion corresponding to about 15 to 30 seconds from the sensing leaf (zero-th address) of the tape 201 is assigned to the sending message area, and the remaining portion is used as an auxiliary memory area for storing an incoming message.

A control is effected by the microcomputer such that at the calling wait time in the automatic answering mode, the zero-th address of the magnetic tape 201 is always stopped at the position of the memorizing and reproducing magnetic head 204.

When the residual capacity of the auxiliary memory area of the magnetic tape 201 is 100%, i.e., an incoming message is given at the first time after reset, the incoming message is stored subsequently to the sending message. The software of the microcomputer is prepared so that where a suitable capacity remains in the auxiliary memory area when an incoming message at the second time after reset and those subsequent thereto are given, after the sending message is completed, fast-feeding is conducted to the head portion of a vacant area of the auxiliary memory area to output a beep tone. Thus, the automatic answering telephone set in the third embodiment can provide a function equivalent to the function in the second embodiment.

In the case of reproducing the incoming message stored in the auxiliary memory area, when the automatic answering telephone set is started directly by the push-button switch 108B in Fig. 2 or by a remote control, a control capable of fast-feeding the sending message portion or the remaining portion thereof may be conducted.

Some advantages with the automatic answering telephone set according to the preferred embodiments are as follows.
(1) Since the telephone set is devised so that an incoming message stored in the auxiliary memory medium is first reproduced and the main memory medium is rewound during such a reproducing operation, and then an incoming message stored in the main memory medium is reproduced, when reproducing the incoming message and listening thereto, it is possible to instantaneously listen to the incoming message without requiring a wasteful wait time. For this reason, a user does not feel irritated and telephone charge can be saved when reproducing the incoming message using a telephone by remote control.
(2) Since the contents of the auxiliary memory medium can be reproduced subsequently to the sending message or instantaneously as long as at least one incoming message is stored in the auxiliary memory medium, even if incoming messages stored are many or less, a user can instantaneously listen to a desired incoming message without requiring a wasteful wait time.
(3) Since an incoming message stored in the main memory medium is automatically reproduced without interruption subsequently to the reproduction of the incoming message stored in the auxiliary memory medium, this automatic answering telephone set is convenient in that no switching operation etc. is required.

## Claims

1. Automatic telephone answering apparatus comprising a main memory medium (18) and an auxiliary memory medium (17), characterised by control means (9) adapted to direct, in a recording mode of the apparatus, all or part of an incoming message or messages for storage first in said auxiliary memory medium (17) and then any subsequent message or messages for storage in said main memory medium (18), said control means (9) further being adapted to activate, in a replaying mode of the apparatus, playback means to reproduce the message(s) or part thereof stored in said auxiliary memory medium (17) and simultaneously to activate means for rewinding/resetting said main memory medium (18) whereafter said control means (9) is arranged to activate said playback means to reproduce said incoming message(s) stored in said main memory medium (18).

2. Automatic telephone answering apparatus as claimed in claim 1, wherein said incoming message(s) stored in said main memory medium (18) is/are activated to begin being reproduced immediately or shortly after reproduction of said incoming message(s) stored in said auxiliary memory medium (17).

3. Automatic telephone answering apparatus as claimed in claim 1, wherein said incoming message(s) stored in said main memory medium (18) is/are activated to begin being reproduced shortly before the reproduction of said incoming message(s) stored in said auxiliary memory medium (17) is completed, thus allowing an overlap of the reproduction of incoming message(s) stored in both said memory media (17,18).

4. Automatic telephone answering apparatus as claimed in claim 1, 2 or 3, wherein message(s) stored in said main memory medium (18) is/are activated to begin being reproduced at a time when reproduction residual capacity of incoming message(s) stored in said auxiliary memory medium (17) reaches a predetermined value, or when the reproduction of an incoming message stored in said auxiliary memory medium (17) is completed after such time.

5. Automatic telephone answering apparatus as claimed in any preceding claim, wherein said auxiliary memory medium (17) comprises a magnetic tape, cassette, disc or sheet, or the like, and when recording of said incoming message shifts from said auxiliary memory medium (17) to said main memory medium (18), said auxiliary memory medium (17) is automatically controlled so as to be brought into a reproduction initiating wait condition.

6. Automatic telephone answering apparatus as claimed in any of claims 1 to 4, wherein the auxiliary memory medium (17) comprises a semiconductor memory device.

7. Automatic telephone answering apparatus as claimed in any preceding claim, wherein the auxiliary memory medium (17) is in the form of an auxiliary memory area provided in a portion of a memory medium for storing a prerecorded answering message.

8. Automatic telephone answering apparatus as claimed in any preceding claim, wherein said auxiliary memory medium (17) has a reproducing time which is set to be equal to or substantially equal to the time taken for the main memory medium (18) to be rewound or reset into a reproducing condition.

9. Automatic telephone answering apparatus as claimed in any preceding claim, wherein said main recording medium (18) comprises a magnetic tape, cassette or cartridge.

## Patentansprüche

1. Automatische Fernsprechbeantwortungs-Vorrichtung mit einem Hauptspeichermedium (18) und einem Hilfsspeichermedium (17), gekennzeichnet durch:
eine Steuereinrichtung (9), geeignet, in einem Aufnahmemodus der Vorrichtung sämtliche oder einen Teil wenigstens einer ankommenden Nachricht zum Abspeichern zuerst in das Hilfsspeichermedium (17) und dann jede nachfolgende(n) Nachricht(en) zum Abspeichern in das Hauptspeichermedium (18) zu leiten,
wobei die Steuereinrichtung (9) weiter geeignet ist, in einem Wiedergabemodus der Vorrichtung eine Wiedergabeeinrichtung zu aktivieren, um die in dem Hilfsspeichermedium (17) gespeicherte(n) Nachricht(en) oder Teile davon wiederzugeben und gleichzeitig eine Einrichtung zum Rückspulen/Rücksetzen des Hauptspeichermediums (18) zu aktivieren, wonach die Steuereinrichtung (9) zur Aktivierung der Wiedergabeeinrichtung eingerichtet ist, um die in dem Hauptspeichermedium (18) gespeicherte(n) ankommende(n) Nachricht(en) wiederzugeben.

2. Automatische Fernsprechbeantwortungs-Vorrichtung nach Anspruch 1, in der die in dem Hauptspeichermedium (18) gespeicherte(n) ankommende(n) Nachricht(en) zum ihrem Wiedergabebeginn aktiviert wird/werden, unmittelbar oder kurz nach Wiedergabe der in dem Hilfsspeichermedium (17) gespeicherte(n) ankommende(n) Nachricht(en).

3. Automatische Fernsprechbeantwortungs-Vorrichtung nach Anspruch 1, in der die in dem Hauptspeichermedium (18) gespeicherte(n) ankommende(n) Nachricht(en) zu ihrem Wiedergabebeginn kurz vor Wiedergabeende der in dem Hilfsspeichermedium (17) gespeicherten ankommenden Nachricht(en) aktiviert wird/werden, so daß sich die Wiedergabe der in beiden Speichermedien (17,18) gespeicherten ankommenden Nachricht(en) überlappen kann.

4. Automatische Fernsprechbeantwortungs-Vorrichtung nach Anspruch 1, 2 oder 3, in der die in dem Hauptspeichermedium (18) gespeicherte(n) Nachricht(en) zu ihrem Wiedergabebeginn zu einer Zeit aktiviert wird/werden, wenn eine Wiedergaberestkapazität wenigstens einer in dem Hilfsspeichermedium (17) gespeicherten ankommenden Nachricht einen vorbestimmten Wert erreicht oder wenn die Wiedergabe einer in dem Hilfsspeichermedium (17) gespeicherten ankommenden Nachricht nach dieser Zeit beendet ist.

5. Automatische Fernsprechbeantwortungs-Vorrichtung nach einem der vorhergehenden Ansprüche, in der das Hilfsspeichermedium (17) ein Magnetband, eine Kassette, eine Diskette oder ein Blatt oder dergleichen umfasst und das Hilfsspeichermedium (17) automatisch so gesteuert wird, daß es in einen Wartezustand der Wiedergabeeinleitung gebracht wird, wenn die Aufnahme der ankommenden Nachricht von dem Hilfsspeichermedium (17) zu dem Hauptspeichermedium (18) wechselt.

6. Automatische Fernsprechbeantwortungs-Vorrichtung nach einem der Ansprüche 1 bis 4, in der das Hilfsspeichermdium (17) eine Halbleiterspeichereinrichtung umfasst.

7. Automatische Fernsprechbeantwortungs-Vorrichtung nach einem der vorhergehenden Ansprüche, in der das Hilfsspeichermedium (17) die Form eines Hilfsspeicherbereichs hat, der in einem Abschnitt eines Speichermediums zum Speichern einer vorab aufgenommenen Beantwortungsnachricht liegt.

8. Automatische Fernsprechbeantwortungs-Vorrichtung nach einem der vorhergehenden Ansprüche, in der das Hilfsspeichermedium (17) eine derart festgelegte Wiedergabezeit hat, daß sie gleich oder im wesentlichen gleich der Zeit ist, die das Hauptspeichermdium (18) zum Rückspulen oder Rücksetzen in einen Wiedergabezustand braucht.

9. Automatische Fernsprechbeantwortungs-Vorrichtung nach einem der vorhergehenden Ansprüche, in der das Hauptspeichermedium (18) ein Magnetband, eine Kassette oder Bandkassette aufweist.

## Revendications

1. Appareil répondeur téléphonique automatique comprenant un milieu de mémoire principale (18) et un milieu de mémoire auxiliaire (17), caractérisé par des moyens de commande (9) adaptés pour diriger, dans un mode d'enregistrement de l'appareil, tout ou partie d'un ou de plusieurs messages entrants, pour stockage d'abord dans ledit milieu de mémoire auxiliaire (17) et puis tout/s autre/s message/s suivant/s pour stockage dans ledit milieu de mémoire principale (18), lesdits moyens de commande (9) étant en outre adaptés pour activer, dans un mode de reproduction de l'appareil, des moyens de lecture pour reproduire le /les message/s ou une partie de celui-ci/ceux-ci, stocké/s dans ledit milieu de mémoire auxiliaire (17) et pour activer simultanément des moyens pour réinitialiser/rebobiner ledit milieu de mémoire principale (18) après quoi lesdits moyens de commande (9) sont agencés pour activer lesdits moyens de lecture pour reproduire le/les message/s entrant/s stocké/s dans ledit milieu de mémoire principale (18).

2. Appareil répondeur téléphonique automatique selon la revendication 1, dans lequel le/les message/s entrant/s stocké/s dans le milieu de mémoire principale (18) est/sont activé/s pour commencer à être reproduit/s immédiatement ou peu de temps après la reproduction du/des message/s entrant/s stocké/s dans ledit milieu de mémoire auxiliaire (17).

3. Appareil répondeur téléphonique automatique selon la revendication 1, dans lequel le/les message/s entrant/s stocké/s dans ledit milieu de mémoire principale (18) est/sont activé/s pour commencer à être reproduit/s peu de temps avant que la reproduction dudit/desdits message/s entrant/s stocké/s dans ledit milieu de mémoire auxiliaire (17) est terminée, autorisant ainsi un chevauchement de la reproduction du/des message/s entrant/s stocké/s dans lesdits deux milieux de mémoire (17,18).

4. Appareil répondeur téléphonique automatique selon la revendication 1,2 ou 3, dans lequel le/les message/s stocké/s dans ledit milieu de mémoire principale (18) est/sont activé/s pour commencer à être reproduit/s à un moment où la capacité résiduelle de reproduction de message/s entrant/s stocké/s dans ledit milieu de mémoire auxiliaire (17) atteint une valeur déterminée, ou lorsque la reproduction d'un message entrant stocké dans ledit milieu de mémoire auxiliaire (17) est terminée après un tel moment.

5. Appareil répondeur téléphonique automatique selon l'une quelconque des revendications précédentes, dans lequel ledit milieu de mémoire auxiliaire (17) comprend une feuille, un disque, une cassette ou une bande magnétique ou analogue, et lorsque l'enregistrement dudit message entrant passe dudit milieu de mémoire auxiliaire (17) audit milieu de mémoire principale (18), ledit milieu de mémoire auxiliaire (17) est commandé automatiquement de manière à être amené dans un état d'attente de déclenchement de reproduction.

6. Appareil répondeur téléphonique automatique selon l'une quelconque des revendications 1 à 4, dans lequel le milieu de mémoire auxiliaire (17) comprend un dispositif à mémoire à semi-conducteur.

7. Appareil répondeur téléphonique automatique selon l'une quelconque des revendications précédentes, dans lequel le milieu de mémoire auxiliaire (17) se présente sous la forme d'une zone de mémoire auxiliaire prévue dans une portion d'un milieu de mémoire pour stocker un message de réponse pré-enregistré.

8. Appareil répondeur téléphonique automatique selon l'une quelconque des revendications précédentes, dans lequel ledit milieu de mémoire auxiliaire (17) a un temps de reproduction qui est établi pour être égal ou à peu près égal au temps que le milieu de mémoire principale (18) prend pour être rebobiné ou réinitialisé dans un état de reproduction.

9. Appareil répondeur téléphonique automatique selon l'une quelconque des revendications précédentes, caractérisé en ce que ledit milieu de mémoire principale (18) comprend une cartouche, une cassette ou une bande magnétique.
